# EUROPEAN PATENT APPLICATION

(11) **EP 4 131 061 A1**
(43) Date of publication of application: **08.02.2023**
(21) Application number: 21776441.4
(22) Date of filing: 04.03.2021
(51) Int. Cl.: G06K 9/00

(54) **VEHICLE LOSS ASSESSMENT METHOD, VEHICLE LOSS ASSESSMENT APPARATUS, AND ELECTRONIC DEVICE USING SAME**

(30) Priority: 23.03.2020 CN 202010206712
(71) Applicant: ARCSOFT CORPORATION LIMITED, Zhejiang 310052 (CN)
(72) Inventor: ZOU, Wencai, Hangzhou, Zhejiang 310052 (CN); CAO, Liangfu, Hangzhou, Zhejiang 310052 (CN); WANG, Jin, Hangzhou, Zhejiang 310052 (CN)
(74) Representative: Novagraaf Technologies
(86) International application number: PCT/CN2021/079127
(87) International publication number: WO 2021/190269

(57) **Abstract**

A method for assessing damage of vehicle, an apparatus for assessing damage of vehicle and an electronic device using same. The method for assessing the damage of the vehicle includes: acquiring vehicle images; processing the vehicle images by a first model to obtain a component identification result, and the component identification result includes a component name, and at least one of a component region and a component mask of a vehicle component; processing the vehicle images by a second model to obtain a damage identification result, and the damage identification result includes a damage morphology, and at least one of a damage region and a damage region mask of the vehicle component; and fusing the component identification result and the damage identification result to obtain a damage assessment result.

## Description

### Cross-Reference to Related Application

The present disclosure takes the patent document of application No. 202010206712.4 filed on March 23, 2020 and entitled "Method for Assessing Damage of Vehicle, Apparatus for Assessing Damage of Vehicle, and Electronic Device Using Same" as the priority document, the disclosure of which is hereby incorporated by reference in its entirety.

### Technical Field

The present disclosure relates to computer vision technology, and in particular, relates to a method for assessing damage of vehicle, an apparatus for assessing damage of vehicle, and an electronic device using same.

### Background

According to data statistics of insurance companies, thousands of traffic accident reports are handled on an average daily basis on a national scale. A general insurance claim settlement process is that an insurance company appoints a damage assessor to go to the spot to carry out a survey, assess the damage, and then compensation is performed according to the amount of the damage assessment. The on-site damage assessment manner requires the damage assessor to rush to the site and perform photographing and surveying of a damaged vehicle, which consumes a lot of time, manpower and financial resources. Therefore, it is necessary to propose an intelligent assessing damage of vehicle technique, which can quickly and accurately complete assessing damage of vehicle and obtain a damage assessment result without the intervention of the damage assessor, thereby shortening the damage assessment time, reducing the damage assessment cost and manual configuration, and optimizing the user experience.

### Summary

Embodiments of the present disclosure provide a method for assessing the damage of vehicle, an apparatus for assessing the damage of vehicle, and an electronic device using the same, so as to at least solve the technical problem in the prior art that a damage assessor needs to intervene to complete assessing the damage of the vehicle.

According to one aspect of embodiments of the present disclosure, a method for assessing the damage of the vehicle is provided, including: vehicle images are acquired; the vehicle images are processed by a first model to obtain a component identification result, and the component identification result includes a component name, and at least one of a component region and a component mask of a vehicle component; the vehicle images are processed by a second model to obtain a damage identification result, and the damage identification result includes a damage morphology, and at least one of a damage region and a damage region mask of the vehicle component; and the component identification result and the damage identification result are fused to obtain a damage assessment result.

Optionally, the first model includes at least one of: a component detection branch, configured to perform component detection processing on the vehicle images to acquire the component region; and a component segmentation branch, configured to perform component segmentation processing on the vehicle images to acquire the component mask; and the first model further includes: a component identification branch, configured to perform component identification processing on the vehicle images to acquire the component name.

Optionally, the second model includes at least one of: a damage detection branch, configured to perform damage detection processing on the vehicle images to acquire the damage region; and a damage segmentation branch, configured to perform damage segmentation processing on the vehicle images to acquire the damage region mask; and the second model further includes: a damage identification branch, configured to perform damage identification processing on the vehicle images to acquire the damage morphology.

Optionally, after the vehicle images are acquired, the method for assessing the damage of the vehicle further includes: a quality of the vehicle images is evaluated to obtain an evaluation result; according to the evaluation result, the vehicle images are classified according to preset categories, and vehicle images of required categories are selected and inputted to the first model and the second model; and if the vehicle images of required categories do not exist, assessing the damage of the vehicle is stopped or it is returned to continue to acquire the vehicle images.

Optionally, the preset categories are determined according to a distance from a photographing point to a damage region or according to the number of components in the vehicle images.

Optionally, the preset categories include: an unqualified category, a qualified category, an ultra-close-shot category, a close-shot category, a medium-shot category, and a long-shot category.

Optionally, after the vehicle images are obtained, the method for assessing the damage of the vehicle further includes: vehicle images having a similarity greater than a first threshold are removed.

Optionally, after the vehicle images are acquired, the method for assessing the damage of the vehicle further includes: enhancement processing on the vehicle images is performed to obtain enhanced vehicle images, and the enhanced vehicle images are inputted to the first model and the second model; and the enhancement processing includes: reflection removal, shadow removal, denoising and night scene enhancement.

Optionally, after the vehicle images are acquired, the method for assessing the damage of the vehicle further includes: the vehicle images are pre-processed, and the pre-processed vehicle images are inputted to the first model and the second model, and the pre-processing includes at least one of: the vehicle images are performed on scaling and the vehicle images are performed on normalization processing.

Optionally, the vehicle images of the medium-shot category are inputted to the first model; and the vehicle images of the close-shot category are inputted to the second model.

Optionally, at least one of a following is voted by a multi-model fusion technique: the component identification result and the damage identification result.

Optionally, the method for assessing the damage of the vehicle further includes: the first model is trained; and correlation constraints of the vehicle components are added in a training process, and the correlation constraints include at least one of: spatial position relationships between different vehicle components, and direction relationships between different vehicle components.

Optionally, the first model or the second model includes at least one of: an RPN network, configured to extract candidate frames in the vehicle images; and align the candidate frames and extract candidate frame features.

Optionally, the candidate frames which are redundant are removed by non-maximum suppression.

Optionally, the component identification result and the damage identification result are fused to obtain the damage assessment result includes: an Intersection Over Union (IOU) value between the component region and the damage region is calculated, or an IOU value between the component region and the damage region mask is calculated, or an IOU value between the component mask and the damage region is calculated, or an IOU value between the component mask and the damage region mask is calculated; whether a matching is successful is judged according to the IOU value, and if the matching is successful, it is determined that the vehicle component is a damaged component, and the damage morphology is determined so as to obtain the damage assessment result; and if the matching is unsuccessful, it is determined that the vehicle component is not damaged.

Optionally, whether the matching is successful is judged according to the IOU value includes: whether the IOU value exceeds a second threshold is judged, and if it is determined that the IOU value exceeds the second threshold, it indicates that the matching is successful, and if it is determined that the IOU value does not exceed the second threshold, it indicates that the matching is unsuccessful; or whether the IOU value exceeds the second threshold and whether the IOU value is the maximum are judged and if it is determined that the IOU value exceeds the second threshold and the IOU value is the maximum, it indicates that the matching is successful; if it is determined that the IOU value does not exceed the second threshold or the IOU value is not the maximum, it indicates that the matching is unsuccessful.

Optionally, the damage morphology is determined includes: the damage morphology with a most serious damage degree is determined as the damage morphology of the damaged component, so that the damaged component and the damage morphology are determined, and the damage assessment result is obtained.

Optionally, the damage morphology is determined includes: the damage identification results of multiple of the vehicle images are fused, and on a basis of calculation and comparison of weights of the damage morphologies, the damage morphology corresponding to the damaged component is obtained and determined.

Optionally, the method for assessing the damage of the vehicle further includes: according to the damage assessment result, it is determined at least one of: a maintenance solution and a damage assessment price.

According to another aspect of the embodiments of the present disclosure, an apparatus for assessing damage of vehicle is further provided, including: a vehicle image acquisition unit, configured to acquire vehicle images; a component identification unit, configured to process the vehicle images by a first model to obtain a component identification result, and the component identification result includes a component name, and at least one of a component region and a component mask of a vehicle component; a damage identification unit, configured to process the vehicle images by a second model to obtain a damage identification result, and the damage identification result includes a damage morphology, and at least one of a damage region and a damage region mask of the vehicle component; and a fusion unit, configured to fuse the component identification result and the damage identification result to obtain a damage assessment result.

Optionally, Optionally, the first model includes at least one of: a component detection branch, configured to perform component detection processing on the vehicle images to acquire the component region; and a component segmentation branch, configured to perform component segmentation processing on the vehicle images to acquire the component mask; and the first model further includes: a component identification branch, configured to perform component identification processing on the vehicle images to acquire the component name.

Optionally, the second model includes at least one of: a damage detection branch, configured to perform damage detection processing on the vehicle images to acquire the damage region; and a damage segmentation branch, configured to perform damage segmentation processing on the vehicle images to acquire the damage region mask; and the second model further includes: a damage identification branch, configured to perform damage identification processing on the vehicle images to acquire the damage morphology.

Optionally, the apparatus for assessing the damage of the vehicle further includes: a quality evaluation unit, configured to evaluate a quality of the vehicle images after acquiring the vehicle images, to obtain an evaluation result; according to the evaluation result, classify the vehicle images according to preset categories, and select vehicle images of required categories and input the vehicle images of required categories to the first model and the second model; and if the vehicle images of required categories do not exist, stop assessing the damage of the vehicle or return to continue to acquire the vehicle images.

Optionally, the preset categories are determined according to a distance from a photographing point to the damage region or according to the number of components in the vehicle images.

Optionally, the apparatus for assessing the damage of the vehicle further includes: an image deduplication unit, configured to remove vehicle images having a similarity greater than a first threshold after acquiring the vehicle images.

Optionally, the apparatus for assessing the damage of the vehicle further includes: an enhancement processing unit, configured to perform enhancement processing on the vehicle images after acquiring the vehicle images, to obtain enhanced vehicle images, and input the enhanced vehicle images to the first model and the second model; and the enhancement processing includes: reflection removal, shadow removal, denoising and night scene enhancement.

Optionally, the apparatus for assessing the damage of the vehicle further includes: a pre-processing unit, configured to pre-process the vehicle images after acquiring the vehicle images, and input the pre-processed vehicle images to the first model and the second model, and the pre-processing includes at least one of: performing scaling on the vehicle images and performing normalization processing on the vehicle images.

Optionally, the apparatus for assessing the damage of the vehicle further includes: training the first model; and correlation constraints of the vehicle components are added in a training process, and the correlation constraints include at least one of: spatial position relationships between different vehicle components, and direction relationships between different vehicle components.

Optionally, the component identification result and the damage identification result are fused to obtain the damage assessment result includes: an Intersection Over Union (IOU) value between the component region and the damage region are calculated, or an IOU value between the component region and the damage region mask are calculated, or an IOU value between the component mask and the damage region are calculated, or an IOU value between the component mask and the damage region mask are calculated; whether matching is successful is judged according to the IOU value, and if the matching is successful, it is determined that the vehicle component is a damaged component, and the damage morphology is determined so as to obtain the damage assessment result; and if the matching is unsuccessful, it is determined that the vehicle component is not damaged.

According to another aspect of the embodiments of the present disclosure, a storage medium is further provided, the storage medium including a program which is stored, and when the program runs, a device in which the storage medium is located is controlled to execute the method for assessing the damage of the vehicle according to any one above.

According to another aspect of the embodiments of the present disclosure, an electronic device is further provided, including: a processor; and a memory configured to store executable instructions of the processor; and the processor is configured to execute the executable instructions to execute the method for assessing the damage of the vehicle according to any one above.

In embodiments of the present disclosure, by performing the following steps: acquiring the vehicle images; processing the vehicle images by the first model to obtain the component identification result, and the component identification result includes the component name, and at least one of the component region and the component mask of the vehicle component; processing the vehicle images by the second model to obtain the damage identification result, and the damage identification result includes the damage morphology, and at least one of the damage region and the damage region mask of the vehicle component; and fusing the component identification result and the damage identification result to obtain the damage assessment result, the technical problem in the prior art that a damage assessor needs to intervene to complete assessing the damage of the vehicle is solved.

### Brief Description of the Drawings

The drawings illustrated herein are used for providing further understanding of the present disclosure and constitute a part of the present disclosure, and the illustrative embodiments of the present disclosure and illustrations thereof are used for explaining the present disclosure, rather than constituting inappropriate limitation on the present disclosure. In the drawings:
Fig. 1 is a flowchart of an optional method for assessing damage of vehicle according to embodiments of the present disclosure;
Fig. 2A is a structural block diagram of a first optional first model according to embodiments of the present disclosure;
Fig. 2B is a structural block diagram of a second optional first model according to embodiments of the present disclosure;
Fig. 2C is a structural block diagram of a third optional first model according to embodiments of the present disclosure;
Fig. 3A is a structural block diagram of a first optional second model according to embodiments of the present disclosure;
Fig. 3B is a structural block diagram of a second optional second model according to embodiments of the present disclosure;
Fig. 3C is a structural block diagram of a third optional second model according to embodiments of the present disclosure;
Fig. 4 is an optional flowchart of obtaining a damage assessment result by fusion according to embodiments of the present disclosure; and
Fig. 5 is a structural block diagram of an optional apparatus for assessing damage of vehicle according to embodiments of the present disclosure.

### Detailed Description of the Embodiments

In order to enable a person skilled in the art to better understand the solutions of the present disclosure, hereinafter, the technical solutions in the embodiments of the present disclosure will be described clearly and thoroughly with reference to the accompanying drawings of embodiments of the present disclosure. Obviously, the embodiments as described are only some of the embodiments of the present disclosure, and are not all the embodiments. On the basis of the embodiments in the present disclosure, all other embodiments obtained by a person of ordinary skill in the art without any inventive effort shall all belong to the scope of protection of the present disclosure.

It should be noted that the terms "first", "second" etc. in the description, claims, and accompanying drawings of the present disclosure are used to distinguish similar objects, and are not necessarily used to describe a specific sequence or order. It should be understood that the sequence so used can be interchanged where appropriate so that embodiments of the present disclosure described herein can be implemented in sequences other than those illustrated or described herein. In addition, the terms "include" and "have", and any variations thereof are intended to cover a non-exclusive inclusion, for example, a process, method, system, product, or device that includes a series of steps or units is not necessarily limited to those steps or units that are clearly listed, but can include other steps or units that are not clearly listed or inherent to such process, method, product, or device.

The embodiments of the present disclosure can be applied to an electronic device having at least one camera unit, and the electronic device can include: a smart phone, a tablet computer, an e-reader, a notebook computer, a personal digital assistant (PDA), a portable multimedia player (PMP), a camera or a wearable device (device of an accessory type such as a watch, a wristband, glasses, a head-mounted apparatus, etc.), electronic clothing, a body-implantable skin chip, a vehicle-mounted electronic instrument, etc.

Hereinafter, a flowchart of an optional method for assessing damage of vehicle according to embodiments of the present disclosure is described. It should be noted that the steps illustrated in the flowchart of the drawings can be executed in a computer system such as a set of computer-executable instructions, and although a logical order is shown in the flowchart, in some cases, the steps shown or described can be executed in a different order from that described herein.

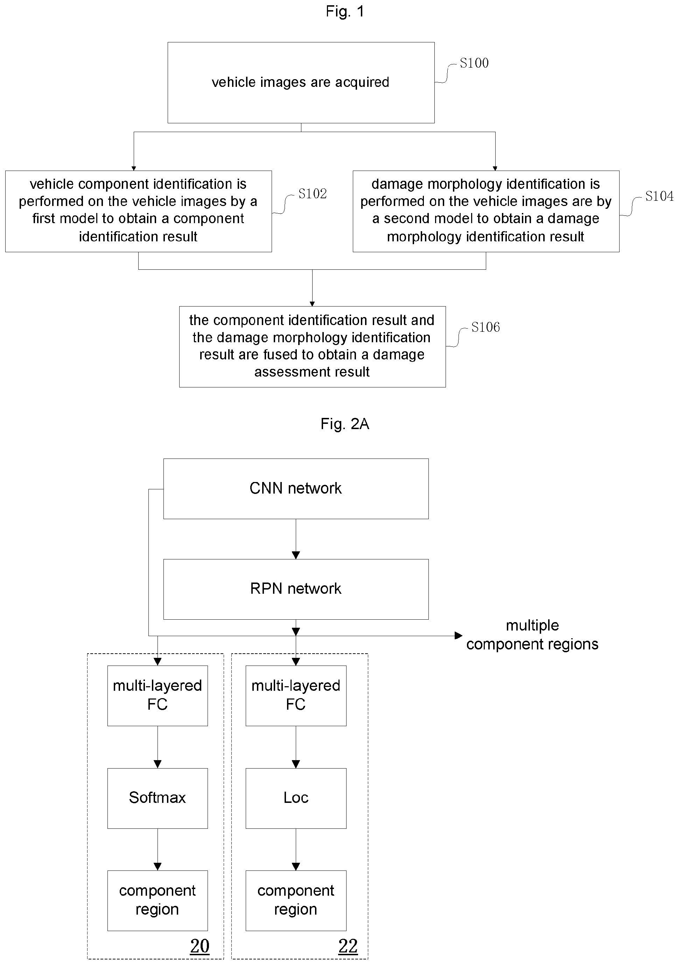

Refer to Fig. 1, which is a flowchart of a first optional method for assessing damage of vehicle according to embodiments of the present disclosure. As shown in Fig. 1, the method for assessing damage of vehicle includes the following steps:
S100, vehicle images are acquired.

In optional embodiments, in the present step, a camera apparatus (for example, an RGB camera) is used to directly acquire the vehicle images by means of photographing, and the vehicle images can also be acquired by means of photographing a vehicle video and performing video frame interception on the vehicle video. Compared with the photographing manner, the manner of photographing the vehicle video has better flexibility, has a low requirement for the photographing position of a user; and by intercepting multiple video frames randomly or at spaced fixed frames, and by combining processing results of the multiple video frames, it is beneficial to improve the accuracy of a damage assessment result. The camera apparatus can be an independent camera, or can be integrated wholly or partially with other cameras into one or more camera modules, can be installed independently, and can also be installed on an electronic device in an embedded manner or in an external-connection manner.

In optional embodiments, when the vehicle images are acquired, a photographing manner of a user can be prompted by means of text, audio, etc. For example, if the user is too far away from the vehicle, the user can be prompted to get close to the vehicle for photographing; on the contrary, if the user is too close to the vehicle, the user can be prompted to get away from the vehicle for photographing, until the user acquires vehicle images meeting requirements.

In optional embodiments, after acquiring vehicle images, the method for assessing the damage of the vehicle further includes: a quality of the vehicle images is evaluated to obtain an evaluation result; according to the evaluation result, the vehicle images are classified according to preset categories, and vehicle images of required categories are selected and inputted to a first model and a second model used in subsequent steps; and if the vehicle images of required categories do not exist, assessing the damage of the vehicle is stopped or it is returned to continue to acquire the vehicle images. Evaluating the quality of the vehicle images to obtain the evaluation result can include: scoring, by a quality evaluation model, factors such as whether the vehicle images are blurred or the blurring degree, the distance between a photographing point and a vehicle body damage region, and the number of components contained in the vehicle images, and using the scoring results as the evaluation result; and according to the evaluation result, classifying the vehicle images according to preset categories, and selecting the vehicle images of required categories can include: setting different thresholds according to the preset categories, and selecting vehicle images with scoring results greater than corresponding thresholds as the vehicle images of required categories. The preset categories can include but are not limited to: an unqualified category, a qualified category, an ultra-close-shot category, a close-shot category, a medium-shot category, and a long-shot category. In optional embodiments, the classification of the ultra-close-shot, the close-shot, the medium-shot, and the long-shot can be determined according to a distance from a photographing point to a vehicle damage region, for example, the super-close-shot can be defined as vehicle images obtained when the photographing point is at a distance of 15-30 cm from the vehicle damage region; the close-shot can be defined as vehicle images obtained when the photographing point is at a distance of 30-60 cm from the vehicle damage region; and the medium-shot can be defined as vehicle images obtained when the photographing point is at a distance of 60-80 cm from the vehicle damage region. Due to different areas of different vehicle components, requirements for photographing distances of different vehicle components are also different, and it can be considered to combine the proportions of different vehicle components in different vehicle images. Therefore, in other optional embodiments, the classification of the super-close-shot, the close-shot, the medium-shot and the long-shot can be determined according to the number of components in the vehicle images, for example, the super-close-shot can be defined as vehicle images containing 1-2 vehicle components, the close-shot can be defined as vehicle images containing 2-4 vehicle components, and the medium-shot can be defined as vehicle images containing 4-6 vehicle components. A vehicle image of a super-close-shot type can be used for terminating the acquisition of vehicle images, that is, when a vehicle image of a super-close-shot type is acquired, the acquisition of the vehicle images is finished. By evaluating the quality of the vehicle images, targeted screening can be performed according to the required categories, for example, blurred vehicle images are removed, vehicle images not containing a vehicle component are removed, etc., and qualified vehicle images belonging to a medium-shot and a close-shot categories are selected, so as to accelerate the obtaining of the damage assessment result and improve the accuracy of the damage assessment result.

In optional embodiments, after the vehicle images are acquired, the method for assessing the damage of the vehicle further includes: vehicle images having a similarity greater than a first threshold are removed, so as to achieve image deduplication without processing repeated images, which can process more different vehicle images in cases where the calculation resources are limited, thereby increasing the efficiency of the vehicle damage assessment. The similarity can be determined by comparing the differences between two images in attributes such as color and texture.

In optional embodiments, the method for assessing the damage of the vehicle further includes: enhancement processing is performed on the vehicle images to obtain enhanced vehicle images, and the enhanced vehicle images are inputted to the first model and the second model used in subsequent steps. The enhancement processing includes but is not limited to: reflection removal, shadow removal, denoising and night scene enhancement. By means of the enhancement processing, the vehicle images with good quality can be obtained, so as to facilitate subsequent processing steps and improve the accuracy of the vehicle damage assessment result.

In optional embodiments, the method for assessing the damage of the vehicle further includes: the vehicle images are pre-processed, and pre-processed vehicle images are inputted to the first model and the second model used in subsequent steps, and the pre-processing includes performing at least one of scaling and normalization (for example, removing mean and then dividing by variance) processing on the vehicle images.

S102, the vehicle images are processed by a first model to obtain a component identification result, and the component identification result includes a component name, and at least one of a component region and a component mask of a vehicle component.

Fig. 2A shows a structural block diagram of a first optional first model. As shown in Fig. 2A, the first model is a multi-task network model, for example, a Faster R-CNN model, and includes: a Convolutional Neural Network (CNN), a Region Proposal Network (RPN), a component identification branch 20 configured to determine a component name, and a component detection branch 22 configured to locate a component region. By extracting candidate frames (i.e. surrounding bounds of a component region) via the RPN network, aligning these candidate frames and extracting candidate frame features, and then respectively performing component name determination and position regression on the candidate frames via the component identification branch 20 and the component detection branch 22, the component name and the component region are respectively obtained as the component identification result. The model structure combines component identification and detection functions, and can determine a component name and locate a component region.

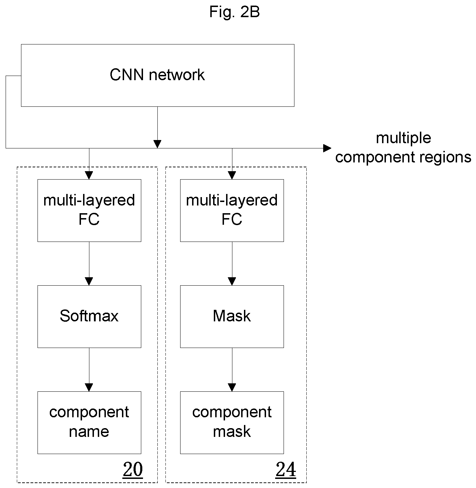

Fig. 2B is a structural block diagram of a second optional first model. As shown in Fig. 2B, the first model is a multi-task network model, e.g., a Deeplab V3 model, and includes: a Convolutional Neural Network (CNN), a component identification branch 20 configured to determine a component name, and a component segmentation branch 24 configured to obtain a component mask. The model structure combines component identification and segmentation functions. Compared with the structure shown in Fig. 2A, in addition to being able to determine a component name, the component segmentation branch 24 can more accurately locate a component position compared with the component detection branch 22.

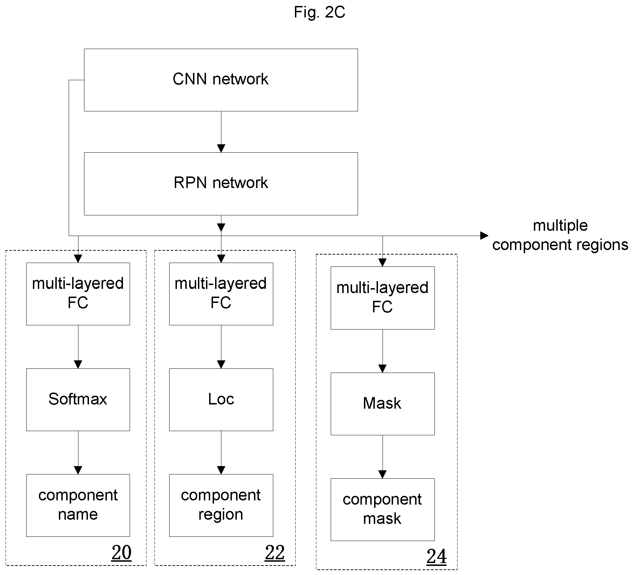

Fig. 2C is a structural block diagram of a third optional first model. As shown in Fig. 2C, the first model is a multi-task network model, for example, a MASK R-CNN model, and includes: a Convolutional Neural Network (CNN), a Region Proposal Network (RPN), a component identification branch 20 configured to determine a component name, a component detection branch 22 configured to locate a component region, and a component segmentation branch 24 configured to obtain a component mask. The model structure combines component identification, detection and segmentation functions. Compared with the structure as shown in Fig. 2B, by means of the mutual cooperation of the component detection branch 22 and the component segmentation branch 24, in addition to being able to determine a component name, the component segmentation branch 24 can further more accurately locate a component position on the basis of the component region acquired by the component detection branch 22, thereby achieving a better damage assessment effect.

In optional embodiments, In order to prevent false identification of similar components such as left and right symmetrical components, the method for assessing the damage of the vehicle further includes: the first model is trained; and correlation constraints of vehicle components are added in a training process, and the correlation constraints include spatial position relationships, direction relationships, etc. between different vehicle components; for example, a front windshield and an engine hood are in an adjacent relationship, the engine hood and a front bumper skin, a left front fender and a right front fender are in adjacent relationships, and a left front door shell, a left rear-view mirror and a left rear door shell are in a same-direction relationship (for example, the same side). By adding the correlation constraints, the identification effect can be effectively improved, and the false identification rate can be reduced.

In optional embodiments, component names of the vehicle components include but are not limited to, front bumper skin, engine hood, left front door shell, right front door shell, left front fender, right front fender, left rear-view mirror, right rear-view mirror, front windshield, etc.

In optional embodiments, when performing vehicle component identification, vehicle images of a medium-shot category can be selected and inputted to the first model, so as to avoid false identification that can occur when vehicle images of a close-shot or super-close-shot category is used, and also avoid the problem of too many backgrounds in vehicle images of a long-shot category.

S104, the vehicle images are processed by a second model to obtain a damage identification result, and the damage identification result includes a damage morphology, and at least one of a damage region and a damage region mask of the vehicle component.

In optional embodiments, the present step includes: extracting candidate frames in the vehicle images by the second model; and aligning the candidate frames and extracting candidate frame features, and performing damage morphology determination and at least one of position regression and mask segmentation on the candidate frames according to the candidate frame features, so as to respectively obtain the damage morphology and at least one of the damage region and the damage region mask, as a damage identification result.

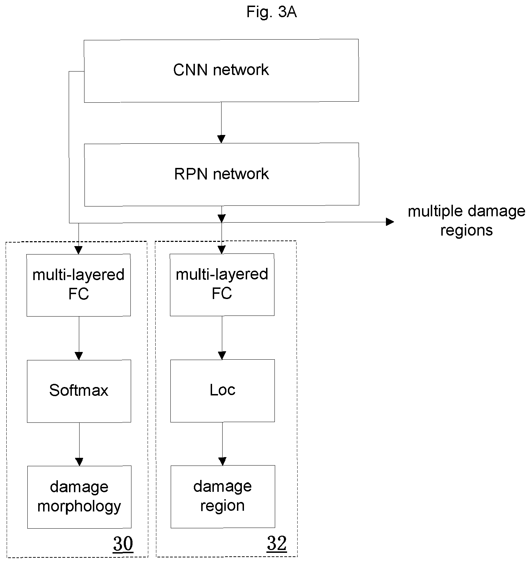

Fig. 3A shows a structural block diagram of a first optional second model. As shown in Fig. 3A, the second model is a multi-task network model, for example, a Faster R-CNN model, and includes a Convolutional Neural Network (CNN), a Region Proposal Network (RPN), a damage identification branch 30 configured to determine a damage morphology, and a damage detection branch 32 configured to locate a damage region. By extracting candidate frames (i.e. surrounding bounds of a damage region) via the RPN network, aligning these candidate frames and extracting candidate frame features, and then respectively performing damage morphology determination and position regression on the candidate frames via the damage identification branch 30 and the damage detection branch 32, a damage morphology and a damage region are respectively obtained as a damage identification result. The model structure combines damage identification and detection functions, and can determine a damage morphology and locate a damage region.

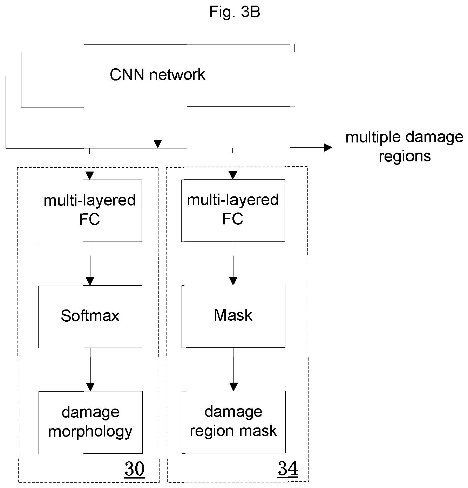

Fig. 3B shows a structural block diagram of a second optional second model. As shown in Fig. 3B, the second model is a multi-task network model, for example, a Deeplab V3 model, and includes a Convolutional Neural Network (CNN), a damage identification branch 30 configured to determine a damage morphology, and a damage segmentation branch 34 configured to obtain a damage region mask. By extracting candidate frames (i.e. surrounding bounds of a damage region) via the RPN network, aligning these candidate frames and extracting candidate frame features, and then respectively performing damage morphology determination and mask segmentation on the damage region via the damage identification branch 30 and the damage segmentation branch 34, a damage morphology and a damage region mask are respectively obtained as a damage identification result. The model structure combines damage identification and segmentation functions. Compared with the structure as shown in Fig. 3A, in addition to being able to determine a damage morphology, the damage segmentation branch 34 can more accurately locate the position of a damage region compared with the damage detection branch 32.

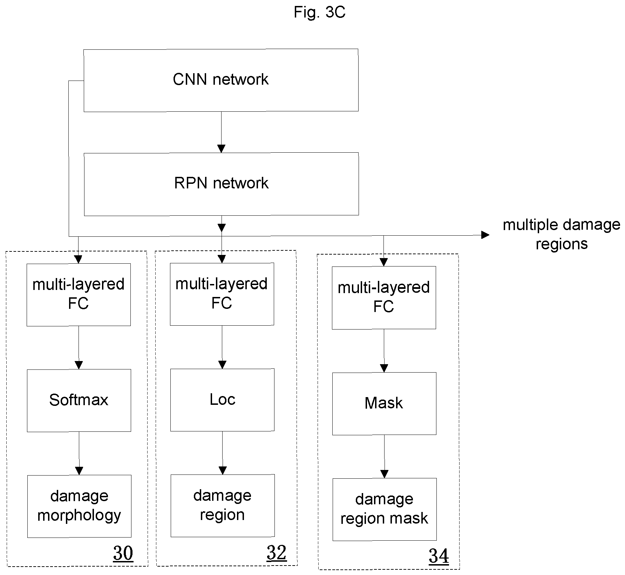

Fig. 3C shows a structural block diagram of a third optional second model. As shown in Fig. 3C, the second model is a multi-task network model, for example, a Mask R-CNN model, and includes a Convolutional Neural Network (CNN), a Region Proposal Network (RPN), a damage identification branch 30 configured to determine a damage morphology, a damage detection branch 32 configured to locate a damage region, and a damage segmentation branch 34 configured to obtain a damage region mask. By extracting candidate frames (i.e. surrounding bounds of a damage region) via the RPN network, aligning these candidate frames and extracting candidate frame features, and then respectively performing damage morphology determination, position regression and mask segmentation on the damage region via the damage identification branch 30, the damage detection branch 32 and the damage segmentation branch 34, a damage morphology, a damage region and a damage region mask are respectively obtained as a damage identification result. The model structure combines damage identification, detection and segmentation functions. Compared with the structure as shown in Fig. 3B, in addition to being able to determine a damage morphology, the damage segmentation branch 34 can further more precisely locate the position of a damage region on the basis of the damage region acquired by the damage detection branch 32, thereby achieving a better damage assessment effect.

In optional embodiments, as multiple candidate frames can exist in the same target region, redundant candidate frames can be removed by non-maximum suppression.

In optional embodiments, the damage morphology includes but is not limited to, scratch, scrape, staggering, slight deformation, moderate deformation, severe deformation 1, severe deformation 2, bending deformation, slight tearing, severe tearing, breakdown, missing, glass crack, glass breakage, lamp housing breakage, etc.

In optional embodiments, when performing vehicle damage morphology identification, as vehicle images of a close-shot category contains clearer damage details, vehicle images of a close-shot category can be selected and inputted to the second model.

In optional embodiments, due to an imbalance of the damage morphology, when the first model or the second model is trained, the vehicle images can be expanded, for example, by illumination disturbance, rotation, perspective transformation, etc., so as to increase the richness of the vehicle images.

A person skilled in the art would have known that without involving any inventive effort, the first model or the second model can adjust the structures and parameters of the models according to detection or identification objects and tasks, and can have the same or different structures and parameters, which are not limited to the examples as shown in Figs. 2A to 2C and Figs. 3A to 3C.

In optional embodiments, in order to improve the accuracy of the identification result, a multi-model fusion (Model Ensemble) technique can be used to vote on at least one of the component identification result and the damage identification result.

S106, the component identification result and the damage identification result are fused to obtain a damage assessment result.

In steps S102 and S104, the component identification result and the damage identification result are respectively obtained, that is, components existing in current vehicle images can be determined by the component identification result, but it is unclear which components are damaged components. In addition, damage regions can be determined by means of the damage identification result; however, it is also unclear which components correspond to these damage regions. Therefore, in order to determine which damage morphologies are specifically included in a certain component in the current vehicle images, it is necessary to fuse the component identification result and the damage identification result so as to obtain the damage assessment result, i.e. determining damage components and damage morphologies corresponding thereto.

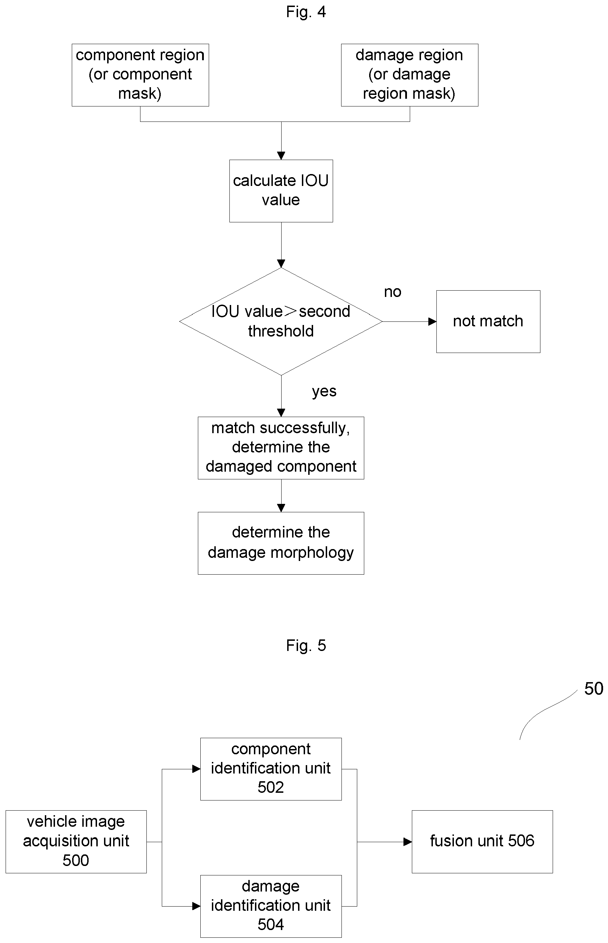

Fig. 4 shows an optional flowchart in which the damage assessment result is obtained by fusion. As shown in Fig. 4, step S106 includes: an Intersection Over Union (IOU) value between the component region and the damage region is calculated, or an IOU value between the component region and the damage region mask is calculated, or an IOU value between the component mask and the damage region, or calculating an IOU value between the component mask and the damage region mask; whether matching is successful is judged according to the IOU value, and if the matching is successful, it is determined that the vehicle component is a damaged component, and the damage morphology is determined so as to obtain the damage assessment result; and if the matching is unsuccessful, it is determined that the vehicle component is not damaged. Whether matching is successful is judged according to the IOU value includes: whether the IOU value exceeds a second threshold is judged, and if it is determined that the IOU value exceeds the second threshold, it indicates that the matching is successful, otherwise, it indicates that the matching is unsuccessful. Or, only by judging whether the IOU value exceeds the second threshold, a situation where one damaged component corresponds to multiple damage morphologies can occur. In order to achieve a one-to-one correspondence between damaged components and damage morphologies, whether the IOU value exceeds the second threshold and whether the IOU value is the maximum can be determined. If it is determined that the IOU value exceeds the second threshold and the IOU value is the maximum, it indicates that the matching is successful; otherwise, it indicates that the matching is unsuccessful.

In optional embodiments, the damage morphology is determined includes: according to damage morphologies corresponding to a damaged component, determining the damage morphology with a most serious damage degree as the damage morphology of the damaged component, so that the damaged component and the damage morphology can be determined, and the damage assessment result can be obtained. The same damage region can have multiple damage morphologies, for example, both moderate deformation and scratch, and after matching, the same damaged component can have multiple corresponding damage morphologies, being inconvenient for damage assessment, and thus the damage morphology with the most serious damage degree can be selected as the damage morphology of the damaged component. Damage degrees corresponding to the damage morphologies can be preset from light to heavy, i.e. painting, sheet metal and replacement, respectively. Some damages are not obvious from some angles, but are obvious from some other angles, and thus in order to improve the identification rate and stability, a multi-frame voting policy can be used to identify damages.

In optional embodiments, the damage morphology is determined includes: damage identification results of multiple vehicle images are fused, and on the basis of calculation and comparison of weights of damage morphologies, the damage morphology of the damaged component is obtained and determined. For example, if a damaged component, i.e. a front bumper skin is both identified to be scraping and identified to be slight tearing, a weight of the scraping and the weight of a slight tearing are respectively calculated and compared, and if the weight of the scraping is higher than the weight of the slight tearing, it is determined that the damage morphology of the front bumper skin is scraping.

According to the method for assessing the damage of the vehicle provided in the embodiments of the present disclosure, with regard to a damaged vehicle in a traffic accident, a user only needs to photograph videos or pictures of the damaged vehicle, to achieve intelligent damage assessment on the damaged degree of the vehicle, without manual damage assessment by a damage assessor, being able to reduce time, labor and costs, also overcoming a subjective determination error of manual damage assessment, and completing intelligent damage assessment at a higher speed and a higher accuracy.

In addition, in an application scenario of the embodiments of the present disclosure, at least one of a maintenance solution and a maintenance price can be determined according to the damage assessment result obtained by the method for assessing the damage of the vehicle.

In another application scenario of the embodiments of the present disclosure, an anti-fraud function can also be provided by applying the method for assessing the damage of the vehicle to a claim settlement terminal of an insurance company. For example, after a user uploads vehicle images via a client, damage detection is performed on the vehicle images by means of the method for assessing the damage of the vehicle, so as to determine whether any damage has indeed occurred, so as to avoid the occurrence of fraud and insurance fraud activities, and reduce human investigation.

A person skilled in the art would have known that the sequence of step S102 and step S104 is not limited.

According to another aspect of the embodiments of the present disclosure, an apparatus for assessing damage of vehicle is further provided. Refer to Fig. 5, which is a structural block diagram of an optional apparatus for assessing the damage of the vehicle according to embodiments of the present disclosure. As shown in Fig. 5, the apparatus for assessing the damage of the vehicle 50 includes a vehicle image acquisition unit 500, a component identification unit 502, a damage identification unit 504, and a fusion unit 506.

Hereinafter, the units included in the apparatus for assessing the damage of the vehicle 50 will be specifically described.

The vehicle image acquisition unit 500 is configured to acquire vehicle images.

In optional embodiments, the vehicle image acquisition unit 500 (for example, an RGB camera) is used to directly acquire the vehicle images by means of photographing, or is used to acquire the vehicle images by means of photographing a vehicle video and performing video frame interception on the vehicle video.

In optional embodiments, the apparatus for assessing the damage of the vehicle 50 can further include a photographing prompting unit, configured to prompt a photographing manner of a user by means of text, audio, etc. when the vehicle images are acquired.

In optional embodiments, the apparatus for assessing the damage of the vehicle 50 further includes: a quality evaluation unit, configured to evaluate a quality of the vehicle images after acquiring the vehicle images, to obtain an evaluation result; according to the evaluation result, classify the vehicle images according to preset categories, and select vehicle images of required categories and input same to a first model and a second model used in subsequent steps; and if the vehicle images of required categories do not exist, stop assessing the damage of the vehicle or return to continue to acquire vehicle images.

In optional embodiments, the apparatus for assessing the damage of the vehicle 50 further includes: an image deduplication unit, configured to remove vehicle images having a similarity greater than a first threshold after acquiring the vehicle images, so as to achieve image deduplication.

In optional embodiments, the apparatus for assessing the damage of the vehicle 50 further includes: an enhancement processing unit, configured to perform enhancement processing on the vehicle images to obtain enhanced vehicle images, and input the enhanced vehicle images to the first model and the second model used in subsequent steps.

In optional embodiments, the apparatus for assessing the damage of the vehicle 50 further includes: a pre-processing unit, configured to input pre-processed vehicle images to the first model and the second model used in subsequent steps, and the pre-processing includes performing at least one of scaling on the vehicle images and normalization (for example, removing mean and then dividing by variance) processing on the vehicle images.

The component identification unit 502 is configured to process the vehicle images by the first model to obtain a component identification result, and the component identification result includes a component name, and at least one of a component region and a component mask of a vehicle component.

In optional embodiments, the component identification unit 502 is configured to extract candidate frames in the vehicle images by the first model; and align the candidate frames and extract candidate frame features, and perform component name determination and at least one of position regression and mask segmentation on the candidate frames according to the candidate frame features, so as respectively obtain the component name and at least one of the component region and the component region mask, as the component identification result. For structures and functions of the first model, reference can be made to Figs. 2A to 2C and related descriptions corresponding thereto, and details are not repeated herein.

In optional embodiments, in order to prevent false identification of similar components such as left and right symmetrical components, the first model needs to be trained; and correlation constraints of components are added in the training process, and the correlation constraints include spatial position relationships, direction relationships, etc. between different vehicle components.

In optional embodiments, when performing vehicle component identification, vehicle images of a medium-shot category can be selected and inputted to the first model, so as to avoid false identification that can occur when vehicle images of a close-shot or super-close-shot category is used, and also avoid the problem of too many background in vehicle images of a long-shot category.

In optional embodiments, in order to improve the accuracy of the identification result, a multi-model fusion (Model Ensemble) technique can be used to vote on at least one of the component identification result and the damage identification result.

The damage identification unit 504 is configured to process the vehicle images by the second model to obtain a damage identification result, and the damage identification result includes a damage morphology, and at least one of a damage region and a damage region mask of the vehicle component.

In optional embodiments, the damage identification unit 504 is configured to extract candidate frames in the vehicle images by the second model; and align the candidate frames and extract candidate frame features, and perform damage morphology determination and at least one of position regression and mask segmentation on the candidate frames according to the candidate frame features, so as respectively obtain the component name and at least one of the component region and the component region mask, as the damage identification result. For the second model, reference can be made to Figs. 3A to 3C and related description corresponding thereto, and details are not repeated herein.

In optional embodiments, when performing vehicle damage morphology identification, as vehicle images of a close-shot category contains clearer damage details, vehicle images of a close-shot category can be selected and inputted to the second model.

The fusion unit 506 is configured to fuse the component identification result and the damage identification result to obtain a damage assessment result.

In optional embodiments, The fusion unit 506 includes: a calculation unit 5061, configured to calculate an Intersection Over Union (IOU) value between the component region and the damage region, or calculate an IOU value between the component region and the damage region mask, or calculate an IOU value between the component mask and the damage region, or calculate an IOU value between the component mask and the damage region mask; and a damage assessment result acquisition unit 5062, configured to determine whether matching is successful according to the IOU value, and if the matching is successful, determine that the vehicle component is a damaged component, and determine the damage morphology so as to obtain the damage assessment result; and if the matching is unsuccessful, determine that the vehicle component is not damaged. Judging whether the matching is successful according to the IOU value includes: judging whether the IOU value exceeds a second threshold, and if it is determined that the IOU value exceeds the second threshold, indicating that the matching is successful, otherwise, indicating that the matching is unsuccessful. Or judging whether the IOU value exceeds the second threshold and whether the IOU value is the maximum, and if it is determined that the IOU value exceeds the second threshold and the IOU value is the maximum, it indicates that the matching is successful; otherwise, it indicates that the matching is unsuccessful.

In optional embodiments, determining the damage morphology includes: according to damage morphologies corresponding to a damaged component, determining the damage morphology with the most serious damage degree as the damage morphology of the damaged component, so that the damaged component and the damage morphology can be determined, and the damage assessment result can be obtained.

In optional embodiments, determining the damage morphology includes: fusing damage identification results of multiple vehicle images, and on the basis of calculation and comparison of weights of damage morphologies, obtaining and determining the damage morphology of the damaged component.

According to the apparatus for assessing the damage of the vehicle provided in the embodiments of the present disclosure, with regard to a damaged vehicle in a traffic accident, a user only needs to photograph videos or pictures of the damaged vehicle, to achieve intelligent damage assessment on the damaged degree of the vehicle, without manual damage assessment by a damage assessor, being able to reduce time, labor and costs, also overcoming a subjective determination error of manual damage assessment, and completing intelligent damage assessment at a higher speed and a higher accuracy.

In addition, in an application scenario of the embodiments of the present disclosure, at least one of a maintenance solution and a maintenance price can be determined according to a damage assessment result obtained by the apparatus for assessing the damage of the vehicle.

In another application scenario of the embodiments of the present disclosure, the apparatus for assessing the damage of the vehicle can also provide an anti-fraud function. For example, after a user uploads vehicle images via a client, damage detection is performed on the vehicle images by means of the apparatus for assessing the damage of the vehicle, so as to determine whether any damage has indeed occurred, so as to avoid the occurrence of fraud and insurance fraud activities, and reduce human investigation.

According to another aspect of the embodiments of the present disclosure, an electronic device is further provided, including: a processor; and a memory configured to store executable instructions of the processor; and the processor is configured to execute the executable instructions to execute the method for assessing the damage of the vehicle according to any one above.

According to another aspect of the embodiments of the present disclosure, a storage medium is further provided, and the storage medium includes a stored program, and when the program runs, a device in which the storage medium is located is controlled to execute the method for assessing the damage of the vehicle according to any one above.

The sequence numbers of embodiments of the present disclosure are only for description, but do not denote the preference of the embodiments.

In the embodiments of the present disclosure, the description of each embodiment has its own emphasis. For the part not detailed in a certain embodiment, please refer to the relevant description in other embodiments.

In the several embodiments provided in the present disclosure, it should be understood that the disclosed technical content can be implemented in other manners. The apparatus embodiment described above is only schematic. For example, the division of the units can be logical functional division, and there can be other division methods in the actual implementation, for example, multiple units or assemblies can be combined or integrated into another system, or some features can be ignored or not executed. In addition, the mutual coupling or direct coupling or communication connection shown or discussed can be indirect coupling or communication connection through some interfaces, units or modules, and can be in the form of electricity or other forms.

The units described as separate components can or can not be physically separated, and the components displayed as units can or can not be physical units, that is, can be located in one place, or can be distributed to multiple units. Some or all units can be selected according to the actual needs to achieve the purpose of the solutions of the embodiments.

In addition, functional units in the embodiments of the present disclosure can be integrated into one processing unit, or the units can exist alone physically, or two or more units are integrated into one unit. The integrated unit can be implemented in the form of hardware, and can also be implemented in the form of a software functional unit.

If the integrated unit is implemented in the form of a software functional unit and is sold or used as an independent product, the integrated unit can be stored in a computer-readable storage medium. On the basis of such understanding, the part of the technical solutions of the present disclosure that contributes in essence or to the prior art or all or part of the technical solutions can be embodied in the form of a software product. The computer software product is stored in a storage medium and includes several instructions to enable a computer device (which can be a personal computer, a server or a network device, etc.) to execute all or some of the steps of the method described in various embodiments of the present disclosure. The storage media includes: media such as a USB flash disk, a Read-Only Memory (ROM), a Random Access Memory (RAM), a removable hard disk, a magnetic disk, or an optical disk, and the like which can store program codes.

The description above only relate to preferred embodiments of the present disclosure. It should be noted that for a person of ordinary skill in the art, several improvements and modifications can also be made without departing from the principle of the present disclosure, and these improvements and modifications shall also be considered as within the scope of protection of the present disclosure.

## Claims

1. A method for assessing damage of vehicle, comprising:
acquiring vehicle images;
processing the vehicle images by a first model to obtain a component identification result,
wherein the component identification result comprises a component name, and at least one of a component region and a component mask of a vehicle component;
processing the vehicle images by a second model to obtain a damage identification result, wherein the damage identification result comprises a damage morphology, and at least one of a damage region and a damage region mask of the vehicle component; and
fusing the component identification result and the damage identification result to obtain a damage assessment result.

2. The method for assessing the damage of the vehicle according to claim 1, wherein
the first model comprises at least one of:
a component detection branch, configured to perform component detection processing on the vehicle images to acquire the component region; and
a component segmentation branch, configured to perform component segmentation processing on the vehicle images to acquire the component mask;
and the first model further comprises: a component identification branch, configured to perform component identification processing on the vehicle images to acquire the component name.

3. The method for assessing the damage of the vehicle according to claim 1, wherein
the second model comprises at least one of:
a damage detection branch, configured to perform damage detection processing on the vehicle images to acquire the damage region; and
a damage segmentation branch, configured to perform damage segmentation processing on the vehicle images to acquire the damage region mask; and
the second model further comprises: a damage identification branch, configured to perform damage identification processing on the vehicle images to acquire the damage morphology.

4. The method for assessing the damage of the vehicle according to claim 1, wherein after acquiring the vehicle images, the method for assessing the damage of the vehicle further comprises:
evaluating a quality of the vehicle images to obtain an evaluation result;
according to the evaluation result, classifying the vehicle images according to preset categories, selecting vehicle images of required categories and inputting the vehicle images of required categories to the first model and the second model; and
if the vehicle images of required categories do not exist, stopping assessing the damage of the vehicle or returning to continue to acquire the vehicle images.

5. The method for assessing the damage of the vehicle according to claim 4, wherein the preset categories are determined according to a distance from a photographing point to the damage region or according to the number of components in the vehicle images.

6. The method for assessing the damage of the vehicle according to claim 4, wherein the preset categories comprise: an unqualified category, a qualified category, an ultra-close-shot category, a close-shot category, a medium-shot category, and a long-shot category.

7. The method for assessing the damage of the vehicle according to claim 1, wherein after the vehicle images are obtained, the method for assessing the damage of the vehicle further comprises: removing vehicle images having a similarity greater than a first threshold.

8. The method for assessing the damage of the vehicle according to claim 1, wherein after acquiring the vehicle images, the method for assessing the damage of the vehicle further comprises:
performing enhancement processing on the vehicle images to obtain enhanced vehicle images, and inputting the enhanced vehicle images to the first model and the second model;
wherein the enhancement processing comprises: reflection removal, shadow removal, denoising and night scene enhancement.

9. The method for assessing the damage of the vehicle according to claim 1, wherein after acquiring the vehicle images, the method for assessing the damage of the vehicle further comprises:
pre-processing the vehicle images, and inputting pre-processed vehicle images to the first model and the second model, wherein the pre-processing comprises at least one of: performing scaling on the vehicle images and performing normalization processing on the vehicle images.

10. The method for assessing the damage of the vehicle according to claim 6, wherein the vehicle images of the medium-shot category are inputted to the first model; and the vehicle images of the close-shot category are inputted to the second model.

11. The method for assessing the damage of the vehicle according to claim 1, wherein at least one of a following is voted by a multi-model fusion technique: the component identification result and the damage identification result.

12. The method for assessing the damage of the vehicle according to claim 1, wherein the method further comprises: training the first model; wherein correlation constraints of the vehicle components are added in a training process, wherein the correlation constraints comprise at least one of: spatial position relationships between different vehicle components, and direction relationships between different vehicle components.

13. The method for assessing the damage of the vehicle according to claim 1, wherein the first model or the second model comprises: an RPN network, configured to extract candidate frames in the vehicle images; and align the candidate frames and extract candidate frame features.

14. The method for assessing the damage of the vehicle according to claim 13, wherein the candidate frames which are redundant are removed by non-maximum suppression.

15. The method for assessing the damage of the vehicle according to claim 1, wherein fusing the component identification result and the damage identification result to obtain the damage assessment result comprises: calculating an Intersection Over Union (IOU) value between the component region and the damage region, or calculating an IOU value between the component region and the damage region mask, or calculating an IOU value between the component mask and the damage region, or calculating an IOU value between the component mask and the damage region mask; judging whether a matching is successful according to the IOU value, and if the matching is successful, determining that the vehicle component is a damaged component, and determining the damage morphology so as to obtain the damage assessment result; and if the matching is unsuccessful, determining that the vehicle component is not damaged.

16. The method for assessing the damage of the vehicle according to claim 15, wherein judging whether the matching is successful according to the IOU value comprises: judging whether the IOU value exceeds a second threshold, and if it is determined that the IOU value exceeds the second threshold, indicating that the matching is successful, and if it is determined that the IOU value does not exceed the second threshold, indicating that the matching is unsuccessful; or judging whether the IOU value exceeds the second threshold and whether the IOU value is the maximum and if it is determined that the IOU value exceeds the second threshold and the IOU value is the maximum, indicating that the matching is successful; if it is determined that the IOU value does not exceed the second threshold or the IOU value is not the maximum, indicating that the matching is unsuccessful.

17. The method for assessing the damage of the vehicle according to claim 15, wherein determining the damage morphology comprises: determining the damage morphology with a most serious damage degree as the damage morphology of the damaged component, so that the damaged component and the damage morphology are determined, and the damage assessment result is obtained.

18. The method for assessing the damage of the vehicle according to claim 15, wherein determining the damage morphology comprises: fusing the damage identification results of multiple of the vehicle images, and on a basis of calculation and comparison of weights of the damage morphologies, obtaining and determining the damage morphology corresponding to the damaged component.

19. The method for assessing the damage of the vehicle according to claim 1, wherein the method further comprises: according to the damage assessment result, determining at least one of: a maintenance solution and a damage assessment price.

20. An apparatus for assessing damage of vehicle, comprising:
a vehicle image acquisition unit, configured to acquire vehicle images;
a component identification unit, configured to process the vehicle images by a first model to obtain a component identification result, wherein the component identification result comprises a component name, and at least one of a component region and a component mask of a vehicle component;
a damage identification unit, configured to process the vehicle images by a second model to obtain a damage identification result, wherein the damage identification result comprises a damage morphology, and at least one of a damage region and a damage region mask of the vehicle component; and
a fusion unit, configured to fuse the component identification result and the damage identification result to obtain a damage assessment result.

21. The apparatus for assessing the damage of the vehicle according to claim 20, wherein
the first model comprises at least one of:
a component detection branch, configured to perform component detection processing on the vehicle images to acquire the component region; and
a component segmentation branch, configured to perform component segmentation processing on the vehicle images to acquire the component mask; and
the first model further comprises: a component identification branch, configured to perform component identification processing on the vehicle images to acquire the component name.

22. The apparatus for assessing the damage of the vehicle according to claim 20, wherein
the second model comprises at least one of:
a damage detection branch, configured to perform damage detection processing on the vehicle images to acquire the damage region; and
a damage segmentation branch, configured to perform damage segmentation processing on the vehicle images to acquire the damage region mask; and
the second model further comprises: a damage identification branch, configured to perform damage identification processing on the vehicle images to acquire the damage morphology.

23. The apparatus for assessing the damage of the vehicle according to claim 20, further comprising: a quality evaluation unit, configured to evaluate a quality of the vehicle images after acquiring the vehicle images, to obtain an evaluation result; according to the evaluation result, classify the vehicle images according to preset categories, and select vehicle images of required categories and input the vehicle images of required categories to the first model and the second model; and if the vehicle images of required categories do not exist, stop assessing the damage of the vehicle or return to continue to acquire the vehicle images.

24. The apparatus for assessing the damage of the vehicle according to claim 23, wherein the preset categories are determined according to a distance from a photographing point to the damage region or according to the number of components in the vehicle images.

25. The apparatus for assessing the damage of the vehicle according to claim 20, wherein the apparatus further comprises: an image deduplication unit, configured to remove vehicle images having a similarity greater than a first threshold after acquiring the vehicle images.

26. The apparatus for assessing the damage of the vehicle according to claim 20, wherein the apparatus further comprises: an enhancement processing unit, configured to perform enhancement processing on the vehicle images after acquiring the vehicle images, to obtain enhanced vehicle images, and input the enhanced vehicle images to the first model and the second model; wherein the enhancement processing comprises: reflection removal, shadow removal, denoising and night scene enhancement.

27. The apparatus for assessing the damage of the vehicle according to claim 20, wherein the apparatus further comprises: a pre-processing unit, configured to pre-process the vehicle images after acquiring the vehicle images, and input the pre-processed vehicle images to the first model and the second model, wherein the pre-processing comprises at least one of: performing scaling on the vehicle images and performing normalization processing on the vehicle images.

28. The apparatus for assessing the damage of the vehicle according to claim 20, wherein the apparatus further comprises: training the first model; wherein correlation constraints of the vehicle components are added in a training process, wherein the correlation constraints comprise at least one of: spatial position relationships between different vehicle components, and direction relationships between different vehicle components.

29. The apparatus for assessing the damage of the vehicle according to claim 20, wherein fusing the component identification result and the damage identification result to obtain the damage assessment result comprises: calculating an Intersection Over Union (IOU) value between the component region and the damage region, or calculating an IOU value between the component region and the damage region mask, or calculating an IOU value between the component mask and the damage region, or calculating an IOU value between the component mask and the damage region mask; judging whether matching is successful according to the IOU value, and if the matching is successful, determining that the vehicle component is a damaged component, and determining the damage morphology so as to obtain the damage assessment result; and if the matching is unsuccessful, determining that the vehicle component is not damaged.

30. A storage medium, wherein the storage medium comprises a program which is stored, wherein when running, the program controls a device where the storage medium is located to execute the method for assessing the damage of the vehicle according to any one of claims 1-19.

31. An electronic device, comprising:
a processor; and
a memory configured to store executable instructions of the processor;
wherein the processor is configured to execute the executable instructions to execute the method for assessing the damage of the vehicle according to any one of claims 1-19.
